# EUROPÄISCHE PATENTSCHRIFT

(11) **EP 3 764 013 B1**
(45) Veröffentlichungstag und Bekanntmachung des Hinweises auf die Patenterteilung: **30.08.2023**
(21) Anmeldenummer: 20171540.6
(22) Anmeldetag: 27.04.2020
(51) Int. Cl.: F24F 13/02, F16L 3/00, F16L 3/24, F24F 13/32

(54) **VORRICHTUNG ZUM AUFHÄNGEN VON RECHTECKIGEN KANALELEMENTEN UND KANALSYSTEM**
DEVICE FOR SUSPENDING RECTANGULAR CHANNEL ELEMENTS AND CHANNEL SYSTEM
DISPOSITIF DE SUSPENSION DES ÉLÉMENTS DE CANAL RECTANGULAIRES ET SYSTÈME DE CANAL

(30) Priorität: 08.07.2019 DE 202019103743 U
(43) Veröffentlichungstag der Anmeldung: 13.01.2021
(73) Patentinhaber: Gebhardt-Stahl GmbH, 59457 Werl (DE)
(72) Erfinder: Schweins, Meinolf, 59457 Werl (DE); Hoffmeister, Bernd, 59469 Ense (DE)
(74) Vertreter: Meinke, Jochen

(56) Entgegenhaltungen:
- DE-A1- 1 906 133
- DE-A1- 3 618 821
- DE-A1- 3 837 990
- DE-U1- 9 411 660

## Beschreibung

Die Erfindung betrifft ein Kanalsystem mit rechteckigen Kanalelementen, insbesondere Lüftungskanalelementen, welche an beiden Stirnseiten jeweils mit umlaufenden Rahmenprofilen versehen sind, die außenseitig eine Wulst aufweisen, wobei stirnseitig aneinander anliegende Rahmenprofile benachbarter Kanalelemente außenseitig jeweils von wenigstens einem querschnittlich C-förmigen Klemmelement umgriffen werden, wobei mit Gewindestangen oder dgl. ausgerüstete Tragschienen zum Aufhängen der Kanalelemente vorgesehen sind.

Lüftungskanäle werden in der Regel aus gefalzten Blechtafeln hergestellt, die an ihren jeweiligen Stirnseiten mit aus Metallrahmenprofilen gebildeten Verspannrahmen ausgerüstet sind, um die einzelnen Kanalelemente nacheinander anordnen und miteinander verspannen zu können. Da die Spannkraft in der Regel über vier Eckwinkel aufgebracht wird, die in die Rahmenprofile eingreifen, besteht die Gefahr, dass die die Stirnseitenrahmen bildenden Rahmenprofile beabstandet von den Ecken auseinander gepresst werden können, so dass es zu Leckagen kommen kann. Deshalb sind die den Stirnseitenrahmen bildenden Rahmenprofile im oberen Bereich mit Fixierwülsten ausgerüstet, die von Vorrichtungen zum Verspannen in Form von Klemmelementen oder Klemmbügeln klemmend übergriffen werden. Diese Vorrichtungen sind z.B. als C-förmige Klemmbügel ausgebildet, wobei auf benachbarte Rahmenprofile zweier Lüftungskanalelemente mehrere derartige Klemmbügel aufgeschoben werden müssen, was relativ aufwendig ist.

Zum Aufhängen der Lüftungskanalelemente an einer Decke oder dgl. ist ein Kanalsystem mit den Merkmalen des Oberbegriffs des Schutzanspruchs 1 bekannt Ein solches Kanalsystem ist in der DE 94 11 660 U offenbart.

Weiterhin ist eine Vorrichtung bekannt, umfassend eine Tragschiene aus einem C-Profil, die an der Unterseite eines Lüftungskanalelementes mit nach oben offenem Profil angeordnet und mittels durch Öffnungen im C-Steg der Tragschiene hindurchgesteckter Gewindestangen und Befestigungsschrauben aufgehängt wird. Wenigstens im Bereich der Kontaktfläche mit dem Lüftungskanalelement wird in die Tragschiene ein schalldämmendes Gummiprofil eingesteckt, das die Kontaktfläche mit dem Lüftungskanalelement bildet. Auch im Bereich der Gewindestangenbefestigungen an der Tagschiene werden in der Regel ringförmige Dämmelemente benachbart zur Befestigungsmutter angeordnet. Erkennbar ist auch die Montage der Tragschienen recht aufwendig.

Aufgabe der Erfindung ist, die Aufhängung bzw. Montage von Kanalelementen, insbesondere Lüftungskanalelementen zu verbessern und zu vereinfachen.

Diese Aufgabe wird erfindungsgemäß durch ein Kanalsystem mit den Merkmalen von Anspruch 1 gelöst.

Dazu wird ein Kanalsystem zur Verfügung gestellt, bei dem in die eigentliche Tragschiene ein C-förmiger Klemmbügel zum spannenden Verbinden benachbarter Rahmenprofile zweier benachbarte Kanalelemente integriert ist, wobei der Klemmbügel von der C-förmigen Längsnut gebildet ist. Die Tragschiene wird mit der Längsnut auf die benachbarten Rahmenprofile aufgeschoben und verspannt diese über ihrer gesamten Länge, wodurch gleichzeitig eine feste, vibrationsfreie Verbindung zwischen der Tragschiene und den Kanalelementen entsteht, so dass es keiner zusätzlichen dämmenden Elemente bedarf. Außerdem entfällt der zusätzliche Aufwand für das Montieren einer Mehrzahl von einzelnen Klemmelementen bzw. Klemmbügeln auf der Kanalseite, die der Tragschiene zugewandt ist. Je nach Einbausituation ist es möglich, die Tragschiene an der Oberseite der Kanalelemente anzuordnen oder an der Unterseite, d.h. die Kanalelemente können an der Tragschiene hängen oder auf dieser aufliegen.

Die Längsnut kann unterschiedlich ausgeführt sein. Nach einer ersten Ausgestaltung ist vorgesehen, dass die Längsnut als Einbuchtung des C-Steges ausgebildet ist. Die Längsnut befindet sich dann im Inneren der Tragschiene.

Alternativ kann nach einer zweiten Ausgestaltung vorgesehen sein, dass die Längsnut als Ausbuchtung des C-Steges ausgebildet ist. Die Längsnut ragt dann nach außen aus der Tragschiene heraus.

Bevorzugt ist vorgesehen, dass die Tragschiene aus Metall besteht. Dabei wird die Tragschiene kaltgewalzt.

Je nach Einbausituation kann entweder vorgesehen sein, dass die jeweilige Tragschiene an der Unterseite der Kanalelemente angeordnet ist, oder dass die jeweilige Tragschiene an der Oberseite der Kanalelemente angeordnet ist.

Die Erfindung ist nachstehend anhand der Zeichnung beispielhaft näher erläutert.

### Diese zeigt in

Fig. 1 eine perspektivische Teildarstellung einer als Tragschiene ausgebildeten Vorrichtung nach einer ersten Ausgestaltung,
Fig. 2 die als Tragschiene ausgebildete Vorrichtung nach Fig. 1 um 180° gedreht,
Fig. 3 eine perspektivische Darstellung einer als Tragschiene ausgebildeten Vorrichtung nach einer zweiten Ausgestaltung,
Fig. 4 die als Tragschiene ausgebildete Vorrichtung nach Fig. 3 um 180° gedreht,
Fig. 5 eine perspektivische Darstellung einer ersten Ausführungsform des erfindungsgemäßen Kanalsystem mit an der Unterseite angeordneter Tragschiene nach Fig. 1,
Fig. 6 ein vergrößertes Detail B in Fig. 5,
Fig. 7 eine Teilseitenansicht teilweise im Schnitt im Bereich B der Fig. 5,
Fig. 8 eine perspektivische Darstellung einer ersten Ausführungsform des erfindungsgemäßen Kanalsystem mit an der Oberseite angeordneter Tragschiene nach Fig. 1,
Fig. 9 ein vergrößertes Detail B in Fig. 8,
Fig. 10 eine Teilseitenansicht teilweise im Schnitt im Bereich B der Fig. 8,
Fig. 11 eine der Fig. 7 entsprechende Darstellung mit einer als Tragschiene ausgebildeten Vorrichtung nach Fig. 3 und
Fig. 12 eine der Fig. 10 entsprechende Darstellung mit einer als Tragschiene ausgebildeten Vorrichtung nach Fig. 3.

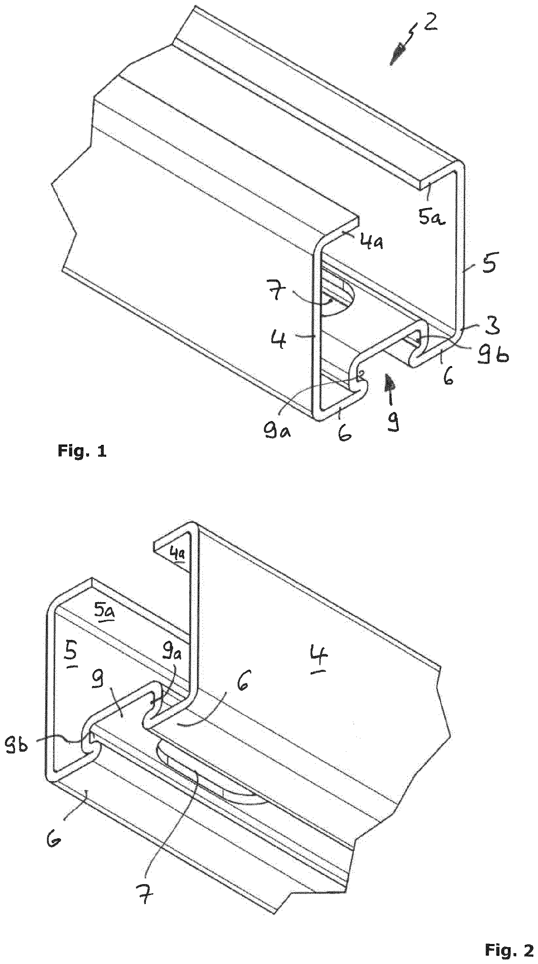

Eine Vorrichtung zum Aufhängen von rechteckigen Lüftungskanalelementen 1 nach einer ersten Ausgestaltung ist in den Figuren 1 und 2 sowie 5 bis 10 allgemein mit 2 bezeichnet. Diese Vorrichtung 2 weist eine Tragschiene 3 aus einem querschnittlich C-förmigen Profil auf. Dabei sind die beiden C-Schenkel mit 4 und 5 bezeichnet, welche an den freien Enden 4a beziehungsweise 5a rechtwinklig nach innen abgewinkelt sind. Zwischen den Außenrändern der beiden freien Enden 4a und 5a ist die Tragschiene 3 somit nach innen offen.

Der die beiden C-Schenkel 4 und 5 verbindende C-Steg ist mit 6 bezeichnet. In diesem C-Steg sind über die Länge der Tragschiene 3 beabstandet voneinander eine Mehrzahl von Öffnungen 7 ausgespart, diese Öffnungen 7 können rund und/oder langlochförmig ausgebildet sein und dienen zum Durchstecken einer Gewindestange 8.

Im C-Steg 6 der Tragschiene 3 ist eine nach außen offene querschnittlich C-förmige Längsnut 9 mit beidseitigem seitlichen Hinterschnitt 9a, 9b ausgebildet. Diese Längsnut 9 ist bei der Vorrichtung nach Fig. 1 als Einbuchtung des C-Steges ausgebildet, d.h. in das Innere der Tragschiene 3 gerichtet.

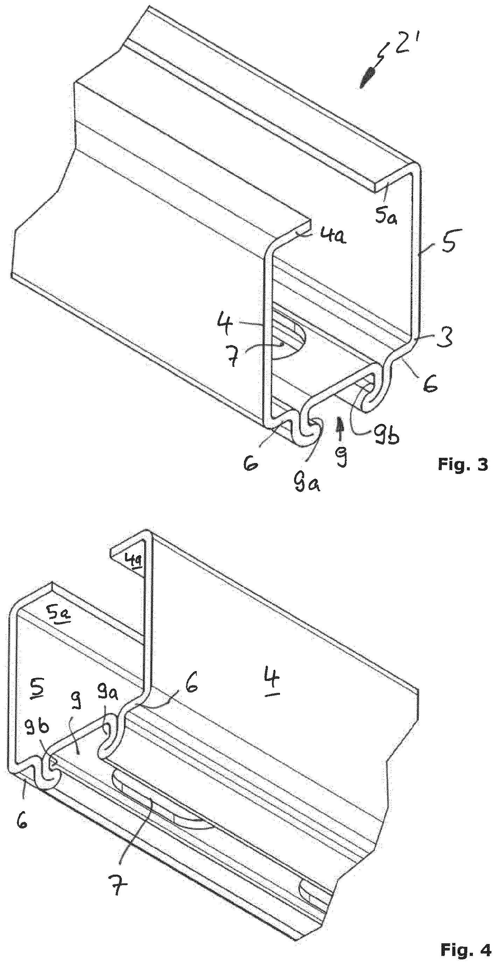

In den Figuren 3 und 4 ist eine weitere, als Tragschiene ausgebildete Vorrichtung dargestellt, die mit 2' bezeichnet ist. Ansonsten sind dieselben Bezugszeichen wie bei der Vorrichtung 2 verwandt, sofern gleiche oder ähnliche Teile betroffen sind.

Im Unterschied zur Ausführungsform nach Fig. 1 und 2 ist die C-förmige Längsnut 9 bei der Vorrichtung 2' nicht als Einbuchtung, sondern als Ausbuchtung des C-Steges 6 ausgebildet, d.h. die Längsnut 9 ragt nach außen aus der Tragschiene 3 hervor.

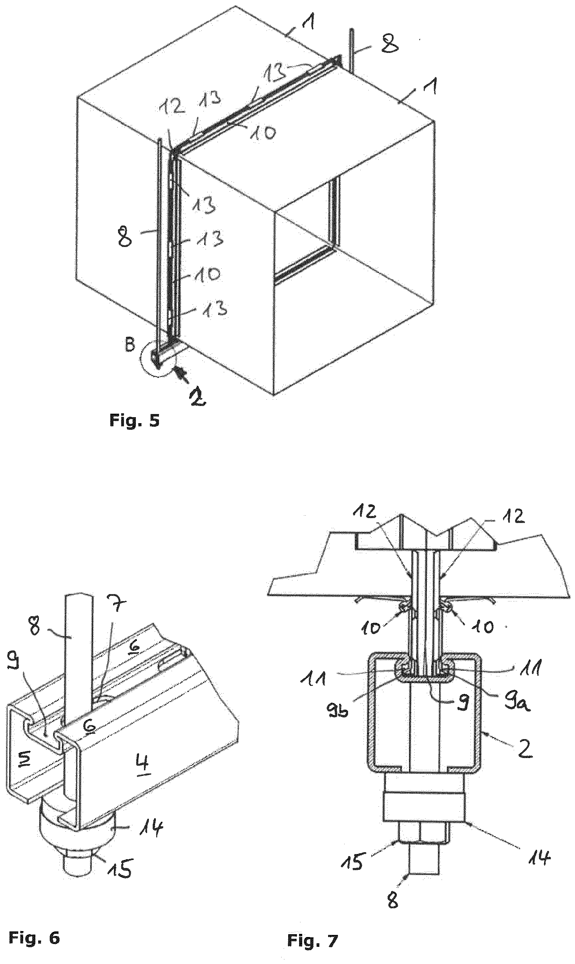

In den Figuren 5 bis 7 ist eine erste Einbausituation der Vorrichtung 2 dargestellt. Zu erkennen sind zwei benachbarte Lüftungskanalelemente 1. Jedes Lüftungskanalelement 1 weist an jedem Seitenrand ein einen Flansch bildendes Rahmenprofil 10 auf, wobei diese Rahmenprofile 10 in an sich bekannter Weise fest und dicht auf den Randbereich der jeweiligen Seite des Lüftungskanalelementes 1 aufgesteckt sind. Zwei benachbarte Rahmenprofile 10 liegen in Montagelage stirnseitig aneinander an, wobei jedes Rahmenprofil 10 außenseitig eine nach außen gerichtete Wulst 11 aufweist. Die Rahmenprofile 10 untereinander sind im Bereich der Ecken über angedeutete Eckwinkel 12 miteinander verbunden. Um Undichtigkeiten über die Länge der Rahmenprofile 10 zu vermeiden, sind auf die Rahmenprofile C-förmige Klemmelemente 13 aufgesteckt, die die beiden Wülste 11 der benachbarten Rahmenprofile 10 klemmend übergreifen.

Zum Aufhängen der Lüftungskanalelemente 1 wird bei der Ausführungsform nach den Figuren 5 bis 7 eine Vorrichtung 2 an der Unterseite der Lüftungskanalelemente 1 angeordnet, und zwar derart, dass die Tragschiene 3 mit der C-förmigen Längsnut 9 nach oben ausgerichtet auf die unterseitigen benachbarten Rahmenprofile 10 sowie die Wülste 11 aufgeschoben wird. Die Wülste 11 liegen dabei im Bereich der Hinterschnitte 9a und 9b der Längsnut 9 arretierend an. Dadurch ist die Vorrichtung 2 fest mit der Unterseite der Rahmenprofile 10 und somit den beiden Lüftungskanalelementen 1 verbunden, wie am besten aus Fig. 7 hervorgeht. Zum eigentlichen Aufhängen wird an beiden Enden der Vorrichtung 2 durch eine Öffnung 7 eine Gewindestange 8 durch die Tragschiene 3 hindurchgeführt. An der Unterseite der Tragschiene 3 wird auf die Gewindestange wenigstens ein ringförmiges Dämmelement 14 aufgesteckt und eine Befestigungsmutter 15 aufgeschraubt. Die Gewindestange 8 ist in nicht dargestellter Weise an einer Decke oder dergleichen befestigt.

Bei der Ausführungsform der Erfindung nach Figuren 5 bis 7 dient die als Tragschiene 3 ausgebildete Vorrichtung 2 somit einerseits dazu, die unterseitigen Rahmenprofile 10 der Lüftungskanalelemente 1 miteinander zu verbinden und anderseits dazu, dass die beiden Lüftungskanalelemente auf der Tragschiene 3 der Vorrichtung 2 aufliegen.

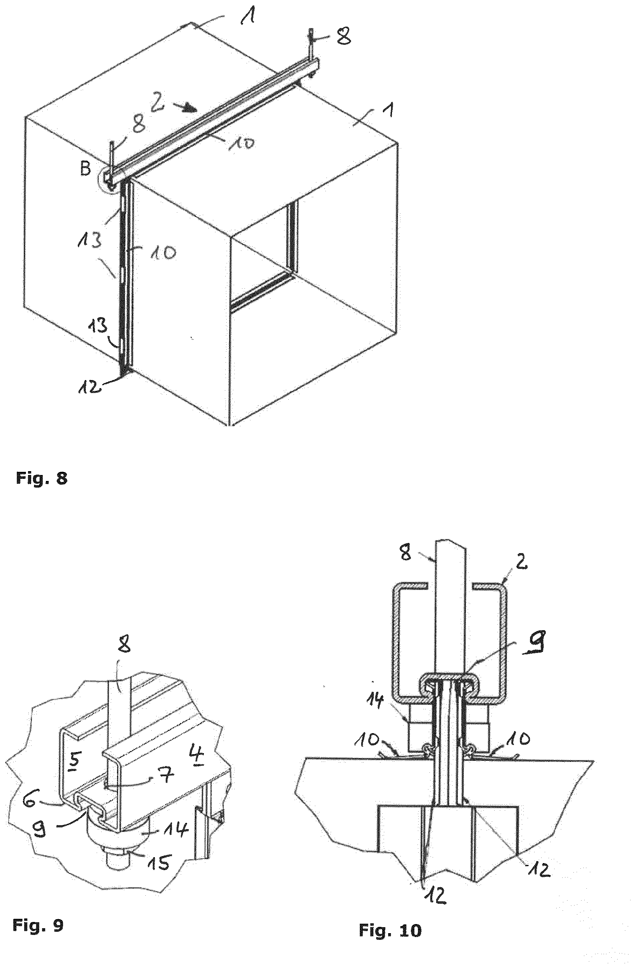

In den Figuren 8 bis 10 ist eine Ausführungsform der Erfindung dargestellt.

Dabei wird die als Tragschiene 3 ausgebildete Vorrichtung 2 umgekehrt, d.h. um 180° gedreht angeordnet, so dass sich die C-förmige Längsnut 9 an der Unterseite befindet. Die als Tragschiene 3 ausgebildete 2 wird dann auf zwei oberseitige benachbarte Rahmenprofile 10 klemmend aufgeschoben und ansonsten in gleicher Weise mittels Gewindestangen 8 befestigt. Bei dieser Ausgestaltung hängen somit die Lüftungskanalelemente 1 über die Rahmenprofile 10 an der als Tragschiene 3 ausgebildeten Vorrichtung 2.

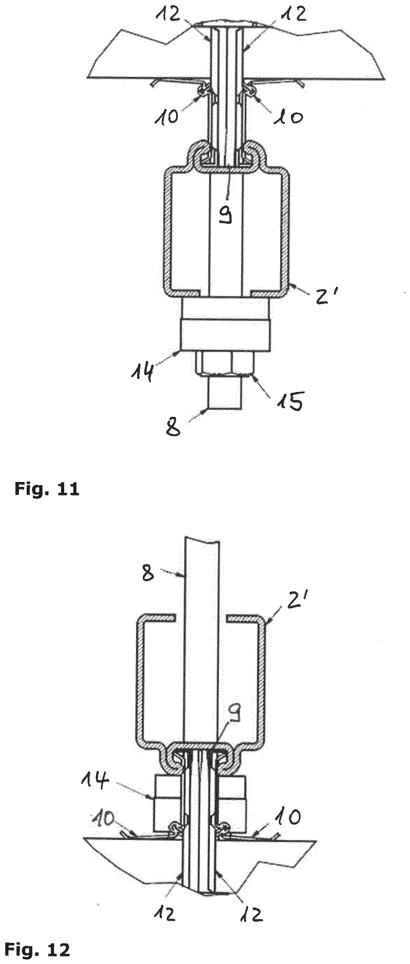

In den Figuren 11 und 12 werden die beiden möglichen Einbausituationen der als Tragschiene 3 ausgebildeten Vorrichtung 2' dargestellt, wobei die grundsätzliche Anordnung der Fig. 11 so ist wie in den Figuren 5 bis 7 dargestellt und die grundsätzliche Anordnung der Fig. 12 so wie in den Figuren 8 bis 10 dargestellt. Dementsprechend ist bei Fig. 11 die Längsnut 9 der als Tragschiene 3 ausgebildeten Vorrichtung 2' an der Oberseite angeordnet und wird auf benachbarte untere Rahmenprofile 10 der benachbarten Lüftungskanalelemente 1 aufgeschoben. Bei dieser Anordnung der als Tragschiene 3 ausgebildeten Vorrichtung 2' liegen die Lüftungskanalelemente 1 auf der Vorrichtung 2' auf, genauso wie bei der Anordnung nach Figuren 5 bis 7.

Figur 12 zeigt demgegenüber wiederum eine hängende Anordnung entsprechend der Ausgestaltung nach Figuren 8 bis 10. Dementsprechend ist bei Fig. 11 die Längsnut 9 der als Tragschiene 3 ausgebildeten Vorrichtung 2' an der Oberseite angeordnet und die Vorrichtung 2' ist mit ihrer Längsnut 9 auf zwei oberseitige Rahmenprofile 10 aufgeschoben.

Natürlich ist die Erfindung nicht auf die dargestellten Ausführungsbeispiele beschränkt. Weitere Ausgestaltungen sind möglich, ohne den Grundgedanken zu verlassen, wie er in den anhängenden Ansprüchen definiert ist.

### Bezuaszeichenliste:

- 1: Lüftungskanalelement
- 2, 2': Vorrichtung
- 3: Tragschiene
- 4,5: C-Schenkel
- 4a,5a: freie Enden
- 6: C-Steg
- 7: Öffnungen
- 8: Gewindestange
- 9: C-förmige Längsnut
- 9a,9b: Hinterschnitt
- 10: Rahmenprofil
- 11: Wulst
- 12: Eckwinkel
- 13: Klemmelement
- 14: Dämmelement
- 15: Mutter

## Patentansprüche

1. Kanalsystem mit rechteckigen Kanalelementen (1), insbesondere Lüftungskanalelementen, welche an beiden Stirnseiten jeweils mit umlaufenden Rahmenprofilen (10) versehen sind, die außenseitig eine nach außen gerichtete Wulst (11) aufweisen, wobei die Wülste (11) stirnseitig aneinander anliegender Rahmenprofile (10) benachbarter Kanalelemente (1) außenseitig jeweils von wenigstens einem querschnittlich C-förmigen Klemmelement umgriffen werden, wobei Gewindestangen (8) oder dgl. zum Aufhängen der Kanalelemente (1) vorgesehen sind,
**dadurch gekennzeichnet,**
**dass** zur spannenden Verbindung benachbarter Rahmenprofile zweier benachbarter Kanalelemente (1) jeweils eine Tragschiene (3) vorgesehen ist, welche die Rahmenprofile (10) beidseitig nach außen überragt und aus einem querschnittlich C-förmigen Profil besteht, in dessen C-Steg (6) entlang der Längsachse eine Mehrzahl von Öffnungen (7) zum Durchstecken einer Gewindestange (8) oder dgl. ausgespart ist, wobei im C-Steg (6) der Tragschiene (3) eine nach außen offene, querschnittlich C-förmige Längsnut (9) mit beidseitigem seitlichen Hinterschnitt (9a,9b) ausgebildet ist, wobei die Längsnut (9) das Klemmelement zum Umgreifen der Wülste (11) benachbarter Kanalelemente (19) bildet, wobei die Öffnungen (7) an den Enden der Tragschiene (3) ausgespart sind.

2. Kanalsystem nach Anspruch 1,
**dadurch gekennzeichnet,**
**dass** die jeweilige Tragschiene (3) an der Unterseite der Kanalelemente (1) angeordnet ist.

3. Kanalsystem nach Anspruch 1,
**dadurch gekennzeichnet,**
**dass** die jeweilige Tragschiene (3,) an der Oberseite der Kanalelemente (1) angeordnet ist.

4. Kanalsystem nach Anspruch 1, 2 oder 3,
**dadurch gekennzeichnet,**
**dass** die Längsnut (9) als Ausbuchtung des C-Steges (6) ausgebildet ist.

5. Kanalsystem nach Anspruch 1, 2 oder 3,
**dadurch gekennzeichnet,**
**dass** die Längsnut (9) als Einbuchtung des C-Steges (6) ausgebildet ist.

## Claims

1. Channel system having rectangular channel elements (1), in particular ventilation channel elements, which are equipped on both end faces respectively with circumferential frame profiles (10) which have on the outside a bead (11) oriented to the outside, wherein the beads (11) of frame profiles (10) of adjacent channel elements (1) abutting on one another at the end faces are grouped around in each case by at least one clamping element which is C-shaped in cross-section, wherein threaded rods (8) or similar are provided for suspending the channel elements (1),
**characterised in that**
for the tensioned connection of adjacent frame profiles of two adjacent channel elements (1) is provided in each case one support rail (3) which protrudes beyond the frame profiles (10) on both sides to the outside and consists of a profile which is C-shaped in cross-section, in the C-web (6) of which a plurality of openings (7) along the longitudinal axis is left out for inserting a threaded rod (8) or similar, wherein in the C-web (6) of the support rail (3) a longitudinal groove (9) which is C-shaped in cross-section and open to the outside is formed with a lateral undercut (9a, 9b) on each side, wherein the longitudinal groove (9) forms the clamping element for gripping around the bead (11) of adjacent channel elements (19), wherein the openings (7) are left out at the end of the support rail (3).

2. Channel system according to claim 1,
**characterised in that**
the respective support rail (3) is arranged on the bottom side of the channel elements (1).

3. Channel system according to claim 1,
**characterised in that**
the respective support rail (3) is arranged on the top side of the channel elements (1).

4. Channel system according to claim 1, 2 or 3,
**characterised in that**
the longitudinal groove (9) is formed as a projection of the C-web (6).

5. Channel system according to claim 1, 2 or 3,
**characterised in that**
the longitudinal (9) groove is formed as an indentation in the C-web (6).

## Revendications

1. Système de canal avec des éléments de canal (1) rectangulaires, en particulier éléments de canal de ventilation, qui sont pourvus sur les deux côtés avant respectivement de profils de cadre (10) tournants qui présentent côté extérieur un bourrelet (11) dirigé vers l'extérieur, dans lequel les bourrelets (11) de profils de cadre (10) reposant côté avant les uns contre les autres d'éléments de canal (1) contigus sont entourés côté extérieur respectivement par au moins un élément de serrage de section transversale en forme de C, dans lequel des tiges filetées (8) ou similaires sont prévues pour accrocher les éléments de canal (1),
**caractérisé en ce que**
pour la liaison de serrage de profils de cadre contigus de deux éléments de canal (1) contigus, respectivement un rail porteur (3) est prévu, lequel dépasse des profils de cadre (10) des deux côtés vers l'extérieur et se compose d'un profil de section transversale en forme de C, dans la nervure en C (6) duquel le long de l'axe longitudinal, une pluralité d'ouvertures (7) est évidée pour l'enfichage d'une tige filetée (8) ou similaire, dans lequel dans la nervure en C (6) du rail porteur (3), une rainure longitudinale (9) ouverte vers l'extérieur, de section transversale en forme de C est réalisée avec une contre-dépouille (9a, 9b) latérale des deux côtés, dans lequel la rainure longitudinale (9) forme l'élément de serrage pour entourer les bourrelets (11) d'éléments de canal (19) contigus, dans lequel les ouvertures (7) sont évidées aux extrémités du rail porteur (3).

2. Système de canal selon la revendication 1,
**caractérisé en ce que**
le rail porteur (3) respectif est agencé au niveau du côté inférieur des éléments de canal (1).

3. Système de canal selon la revendication 1,
**caractérisé en ce que**
le rail porteur (3) respectif est agencé au niveau du côté supérieur des éléments de canal (1).

4. Système de canal selon la revendication 1, 2 ou 3,
**caractérisé en ce que**
la rainure longitudinale (9) est réalisée comme renflement de la nervure en C (6).

5. Système de canal selon la revendication 1, 2 ou 3,
**caractérisé en ce que**
la rainure longitudinale (9) est réalisée comme échancrure de la nervure en C (6).
